**Europäisches Patentamt**

**European Patent Office**

**Office européen des brevets**

(19)

(11) Veröffentlichungsnummer: **0 043 444**
**B1**

(12) ## EUROPÄISCHE PATENTSCHRIFT

(45) Veröffentlichungstag der Patentschrift:
**12.09.84**

(51) Int. Cl.³: **B 61 D 17/22,** B 60 D 5/00

(21) Anmeldenummer: **81104246.4**

(22) Anmeldetag: **03.06.81**

(54) **Wagenübergangseinrichtung.**

(30) Priorität: **30.06.80 DE 3024635**

(43) Veröffentlichungstag der Anmeldung:
**13.01.82 Patentblatt 82/2**

(45) Bekanntmachung des Hinweises auf die Patenterteilung:
**12.09.84 Patentblatt 84/37**

(84) Benannte Vertragsstaaten:
**BE FR GB IT**

(56) Entgegenhaltungen:
**CH - A - 524 497**
**DE - A - 1 455 082**
**DE - A - 2 636 082**
**DE - B - 1 024 109**
**DE - B - 1 057 639**
**DE - C - 735 821**
**US - A - 3 410 226**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Hassel, Helmut, Dr., Bodenehrstrasse 20, 8850 Donauwörth (DE)**
Erfinder: **Stark, Reimund, Ing. grad., Flurstrasse 10, 8891 Griesbeckerzell (DE)**

ACTORUM AG

**Beschreibung**

Die Erfindung bezieht sich auf eine Wagenübergangseinrichtung für spurgeführte Hochgeschwindigkeitsfahrzeuge mit einem geschlossenen Übergangstunnel der mittels umlaufender Dichtungen druckdicht abgeschlossen ist.

Aus der CH-A-524 497 ist ein derartiger Wagen-übergang mit automatischer Zentralkupplung offenbart, der einen in sich starren Tunnel bildet und in exakt definierten Punkten drehbar am Wagen befestigt ist. Die Abdichtung wird mittels umlaufender Dichtungen hergestellt, die bei Kurvenfahrten zusammengequetscht werden. Nachteilig ist hier, dass die nicht zu verhindernden Einlagerungen von Schmutz und Eis im Dichtungsraum sehr schnell zur Zerstörung der Abdichtung und ausserdem zu unerwünschten Quietsch- und Knirschgeräuschen führt.

Aus der DE-B-1 057 639 ist ein schallisolierter Übergangsschutz für Schienenfahrzeuge bekanntgeworden, deren Wandungen mit einer schallschluckenden elastischen Matte versehen ist und die Einrichtung mittels Schraubverbindungen verbunden ist. Eine automatische Zentrierung und Kupplung bzw. Entkupplung ist hier nicht durchführbar, ausserdem ist die Lebensdauer der als begehbar ausgebildeten Isolierung aufgrund der ständigen Scheuerbelastung auf der Teleskopabstützung erheblich verkürzt. Eine Anpassung der Flexibilität des Tunnels an die jeweilige Geschwindigkeit ist nicht möglich.

Aus der US-A-3 410 226 ist eine Wagenübergangseinrichtung offenbart, die mit einem flexiblen sowie schall- und wärmeisolierenden Tunnel versehen ist. Die vorhandene Steifigkeit des Tunnels ist auch hier nicht an die jeweilige Geschwindigkeit anpassbar.

Aus der DE-A-1 455 082 ist eine strömungsgünstige Abdeckung des Zwischenraumes zweier Schienenfahrzeuge offenbart, die in Form eines Gummiwulstes ausgestaltet ist. Nun ist zwischenzeitlich jedoch bekannt geworden, dass derartige Verkleidungen für höhere Geschwindigkeiten in der Formhaltung instabil sind und Flattergeräusche schon bei geringen Luftströmungen erzeugen.

Bei Schnellfahrten mit spurgeführten Fahrzeugen werden jedoch eine Anzahl von Forderungen gestellt, die durch die Ausführungsformen nach dem Stand der Technik nicht zu erfüllen sind.

So wird eine extrem gute Abdichtung des Übergangs sowie die Vermeidung von Spalten zwischen den einzelnen Fahrzeugeinheiten gefordert. Hierbei soll die Abdichtung dafür Sorge tragen, dass der von Wagen zu Wagen gehende Passagier nicht übermässig durch Lärm, Zugluft, Schmutz und Kälte belästigt oder sogar durch plötzliche Druckstösse gefährdet wird. Die weitgehende Vermeidung eines Spaltes zwischen den Wagen soll der Reduzierung des aerodynamischen Widerstandes dienen und für ein geschlossenes, zusammenhängendes Gesamtbild des Zuges Sorge tragen.

All diese Forderungen neuzeitlichen Fahrkomforts können die bisher bekannten Ausführungsformen in ihrer Gesamtheit nicht erfüllen. So ist beispielsweise der aus Gummiwülsten bestehende Regelübergang der Deutschen Bundesbahn weder dicht noch verschliesst er die Lücke zwischen den einzelnen Wagen. Er bietet praktisch keinerlei Schutz gegen Lärmbelästigung und verhindert das Eindringen von Zugluft, Schmutz und Kälte nur sehr mangelhaft.

Um diese Nachteile wenigstens einigermassen zu beheben, wurden verschiedentlich Faltenbalg- oder Glatt-Tuchübergänge angeordnet. Diese verbesserten zwar die erstgenannten Ausführungsformen, da sie eine ziehharmonikaähnliche, geschlossene Aussenkontur herstellten, aber ihre Anwendung wurde aufgrund des umständlichen und langwierigen Koppelvorgangs und des hohen Verschleisses nur an wenigen Spezialzügen vorgenommen.

Der vorliegenden Erfindung liegt die Aufgabe zugrunde, eine Wagenübergangseinrichtung der eingangs genannten Art zu schaffen, die die Nachteile des Standes der Technik beseitigt und ein in sich stabiles System schafft, das in seiner Steifigkeit an die jeweiligen Verhältnisse anpassbar ist.

Diese Aufgabe wird durch die in den Ansprüchen niedergelegten Massnahmen in überraschend wirkungsvoller Weise gelöst. In der nachfolgenden Beschreibung ist ein Ausführungsbeispiel erläutert und in der Zeichnung dargestellt. Es zeigen:

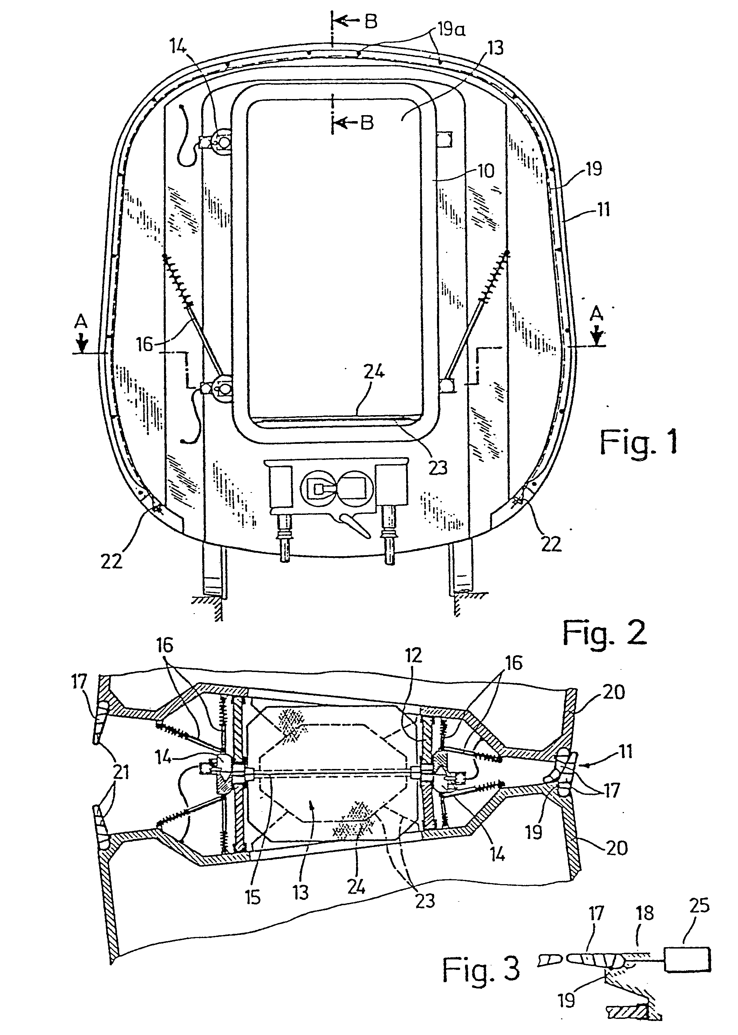

Fig. 1 eine Frontansicht eines Wagenüberganges nach der Erfindung,

Fig. 2 einen Schnitt entlang der Linie A–A gemäss Fig. 1,

Fig. 3 einen Teilschnitt entlang der Linie B–B gemäss Fig. 1.

Der allgemeine Erfindungsgedanke des hier beschriebenen Vorschlags sieht vor, dass die gesamte Wagenübergangseinrichtung gemäss ihren Funktionen aus zwei einzelnen oder gemeinschaftlich verwendbaren Anordnungen besteht, und zwar für die Funktion «Abdichten nach innen» eine sogenannte «innere Übergangseinrichtung» und für die Funktion «Aussenbündigkeit und Spaltverringerung» eine sogenannte «äussere Übergangseinrichtung». Beide vorgenannten Einrichtungen sind – wie bereits erwähnt – voneinander getrennt und unabhängig.

Die «innere» Übergangseinrichtung 10 setzt sich aus einer allseitigen Umhüllung des Übergangsraumes bzw. Übergangstunnel 13 und automatischen Kuppel- und Verriegelungseinrichtungen 14 sowie Selbstzentriervorrichtungen 15 zusammen.

Dieser druckdichte Übergangstunnel 13 besteht aus einem flexiblen, schall- und wärmeisolierenden Material, wobei eine vollkommene Abdichtung des Raumes durch Aufblasen von Dichtwulsten nach dem Verriegeln bzw. Ankuppeln von Wagen zu Wagen erzielt wird. Diese innere Übergangseinrichtung ist mehrfach gelenkig mittels Federdämpfungselementen 16 aufgehängt.

Die äussere Übergangseinrichtung 11 ist ein bündig mit der Aussenkontur der Fahrzeugeinheit verbundener Mehrkammerluftbalg, dessen Steifigkeit mehrstufig einstellbar ist, um bei Schnellfahrten eine stabile Aussenkontur und bei langsamen Fahrten durch enge Kurven eine erforderliche Flexibilität zu gewährleisten. Von Wagen 20 zu Wagen 20 wird ein aufblasbares Mehrkammerhohlprofil 17 so geführt, dass es den Zwischenraum der aneinandergekuppelten Wagen bündig mit deren Aussenkontur abschliesst. Hierzu weisen die Wagenenden 20 eine Profilleiste 18 auf, worin das Mehrkammerhohlprofil 17 mittels einer in ihr einvulkanisierten Stahlseele 19 eingespannt wird. Zur zusätzlichen Befestigung können noch einvulkanisierte Schrauben 19a angeordnet sein. Weiterhin sind an den Wagenenden 20 Spannvorrichtungen 22 für die Stahlseilseele 19 angeordnet, die letztere in ihrer Spannung einstellen können.

Weiterhin ist das Mehrkammerhohlprofil 17 mit Versteifungsrippen 21 so versehen, dass es in Fahrtrichtung elastischer als quer zur Fahrtrichtung ist. Die einzelnen Kammern sind zur Erzeugung eines Innendruckes und damit zur Erhöhung der Steifigkeit aufblasbar ausgestaltet, wobei der Innendruck in verschiedenen Stufen, je nach den Umweltbedingungen – beispielsweise Fahrgeschwindigkeit – automatisch einstellbar ist.

Diese automatische Drucklufteinstellung erfolgt über das zugeigene Druckluftsystem und die jedem Mehrkammerhohlprofil zugeordneten Regler 25. Der Anschluss an dieses System erfolgt über die bekannten Zugschnellverschlüsse.

Der Übergangsboden setzt sich aus den an sich bekannten gelenkig angeordneten Übergangsblechen 23 und einer darüber angeordneten Gummiprofilmatte 24 zusammen.

Durch die vorgenannten Ausgestaltungen und die Kombination der Wagenübergangseinrichtungen ist sowohl eine aerodynamisch einwandfreie Einrichtung für Hochgeschwindigkeitsfahrzeuge geschaffen worden als auch die Möglichkeit, dem Fahrgast ein Optimum an Komfort für die Passage von einem Wagen zum anderen zu bieten.

Selbstverständlich ist es auch möglich, die beschriebene äussere Übergangseinrichtung mit einer beliebig anderen inneren Übergangseinrichtung zu verwenden oder auch ganz ohne eine solche; dasselbe gilt auch umgekehrt.

**Patentansprüche**

1. Wagenübergangseinrichtung für spurgeführte Hochgeschwindigkeitsfahrzeuge mit einem geschlossenen Übergangstunnel der mittels umlaufender Dichtungen druckdicht abgeschlossen ist, dadurch gekennzeichnet, dass die Funktion «Abdichten» durch eine aus einem flexiblen schall- und wärmeisolierenden Material (12) bestehenden und über automatische Kuppel- und Verriegelungsvorrichtungen (14) sowie Selbstzentrierungen (15) gebildeten «inneren» Übergangseinrichtung (10) erfüllt wird und unabhängig von dieser die Funktion «Aussenhautbündigkeit» mittels einer äusseren» Übergangseinrichtung (11) gewährleistet ist, deren ganz oder teilweise um die Wagenaussenkontur geführtes Mehrkammerhohlprofil (17) geschwindigkeitsabhängig aufblasbar ist.

2. Einrichtung nach Anspruch 1, dadurch gekennzeichnet, dass die innere Übergangseinrichtung (10) mehrfach gelenkig mittels Feder-Dämpfungselemente (16) aufgehängt ist.

3. Einrichtung nach Anspruch 1, dadurch gekennzeichnet, dass das Mehrkammerhohlprofil (17) über das zugeigene Druckluftsystem bezüglich des Innendruckes automatisch in verschiedenen Stufen einstellbar ist.

4. Einrichtung nach den Ansprüchen 1 und 3, dadurch gekennzeichnet, dass das Mehrkammerhohlprofil (17) zur Einspannung in einem Profil (18) an den Wagenenden (20) mit einer einvulkanisierten Stahlseele (19) versehen ist.

5. Einrichtung nach den Ansprüchen 1, 3 und 4, dadurch gekennzeichnet, dass das Mehrkammerhohlprofil (17) mit Versteifungsrippen so versehen ist, dass es quer zur Fahrtrichtung steifer als in Fahrtrichtung ist.

6. Einrichtung nach den Ansprüchen 1, 3 bis 5, dadurch gekennzeichnet, dass das Mehrkammerprofil (17) an den jeweiligen Wagenenden (20) mittels Spanneinrichtungen (22) für die Stahlseilseele (19) einstellbar befestigbar ist.

7. Einrichtung nach einem oder mehreren der Ansprüche 1–6, dadurch gekennzeichnet, dass der Übergangsboden in an sich bekannter Weise aus gelenkigen Blechen (23) gebildet wird, die von einer flexiblen Profilmatte (24) überdeckt sind.

**Claims**

1. A carriage passageway arrangement for track-guided high-speed vehicles having a closed passageway tunnel which is sealed in a pressure-tight manner by means of encircling seals, characterised in that the "sealing" function is fulfilled by an "inner" passageway system (10) consisting of a flexible sound- and heat-insulating material (12) and formed with automatic coupling and locking devices (14) as well as self-centrings (15), and, independently of this, the "outer-skin flushness" function is ensured by means of an "outer" passageway system (11) having a multi-chamber hollow profile (17) which extends wholly or partially around the outer contour of the carriage and is inflatable in a speed-dependent manner.

2. A system according to claim 1, characterised in that the inner passageway system (10) is multiply hingedly suspended by means of spring damping elements (16).

3. A system according to claim 1, characterised in that the internal pressure of the multi-chamber hollow profile (17) is automatically adjustable in various stages by way of the compressed-air system of the train.

4. A system according to claims 1 and 3, characterised in that the multi-chamber hollow profile (17) is provided with a steel core (19) which is vulcanised in place to permit clamping of a profile (18) at the carriage ends (20).

5. A system according to claims 1, 3 and 4, characterised in that the multi-chamber hollow profile (17) is provided with stiffening ribs in such a way that it is stiffer transversely to the direction of travel than in the direction of travel.

6. A system according to claims 1 and 3 to 5, characterised in that the multi-chamber hollow profile (17) is adjustably fastenable to the respective carryiage ends (20) by means of tensioning devices (22) for the steel rope core (19).

7. A system according to one or more of claims 1 to 6, characterised in that the passageway floor is formed in known 'per se' manner from articulated metal sheets (23) which are covered by a flexible profile mat (24).

## Revendications

1. Dispositif de passage d'une voiture à une autre pour des véhicules à haute vitesse guidés sur une voie muni d'un tunnel de passage fermé de façon étanche à la pression par des joints périphériques et caractérisé par le fait que la fonction «étanchéité» est remplie par un dispositif de transition «intérieur» (10) fait d'un matériau isolant phonique et thermique flexible (12) et formé de dispositifs automatiques d'accouplement et de verrouillage (14) ainsi que d'autocentrages (15) et qu'indépendamment de celui-ci la fonction «continuité de la carrosserie» est assurée par un dispositif de transition «extérieur» (11) dont le profilé creux à chambres multiples (17) faisant le tour complet ou partiel du contour extérieur de la voiture est gonflable en fonction de la vitesse.

2. Dispositif selon la revendication 1 caractérisé par le fait que le dispositif de transition intérieur (10) est suspendu sous articulation multiple au moyen d'éléments amortisseurs élastiques (16).

3. Dispositif selon la revendication 1 caractérisé par le fait que le profilé creux à chambres multiples (17) est réglable quant à sa pression intérieure automatiquement en différents échelons par le propre réseau d'air comprimé du train.

4. Dispositif selon les revendications 1 et 3 caractérisé par le fait que le profilé creux à chambres multiples (17) comporte pour son blocage dans un profilé (18) des extrémités (20) de la voiture, une âme d'acier (19) sertie par vulcanisation.

5. Dispositif selon les revendications 1, 3 et 4 caractérisé par le fait que le profilé creux à chambres multiples (17) est muni de nervures de renforcement de façon à être plus rigide transversalement à la direction de marche qu'en direction de marche.

6. Dispositif selon les revendications 1, 3 et 5 caractérisé par le fait que le profilé à chambres multiples (17) est fixable de façon réglable à chaque extrémité (20) de la voiture au moyen de dispositifs de mise en tension (22) de l'âme en fil d'acier (19).

7. Dispositif selon une ou plusieurs des revendications 1 à 6 caractérisé par le fait que le sol du passage est formé, de façon connue, par des tôles articulées (23) qui sont recouvertes d'une natte profilée flexible (24).

0 043 444

Fig. 1

Fig. 2

Fig. 3

5